# FASCICULE DE BREVET EUROPEEN

(11) **EP 3 537 407 B1**
(45) Date de publication et mention de la délivrance du brevet: **19.05.2021**
(21) Numéro de dépôt: 19161128.4
(22) Date de dépôt: 06.03.2019
(51) Int. Cl.: G08G 1/015, B32B 17/10, B60J 1/00, G01V 8/20, G06K 9/00, G08G 1/054, G06K 9/20

(54) **DISPOSITIF ET PROCÉDÉ POUR DIFFÉRENCIER UN POIDS LOURD DE TRANSPORT DE MARCHANDISES D'UN AUTOCAR**
VORRICHTUNG UND VERFAHREN ZUM UNTERSCHEIDEN EINES LASTKRAFTWAGENS ZUM WARENTRANSPORT VON EINEM BUS
DEVICE AND METHOD FOR DIFFERENTIATING A HEAVY GOODS VEHICLE FOR TRANSPORTING GOODS FROM A COACH

(30) Priorité: 08.03.2018 FR 1852025
(43) Date de publication de la demande: 11.09.2019
(73) Titulaire: Idemia Identity & Security France, 92400 Courbevoie (FR)
(72) Inventeur: ALLIOT, Samuel, 92400 COURBEVOIE (FR); CARRION, Grégoire, 92400 COURBEVOIE (FR); GUIDON, Eric, 92400 COURBEVOIE (FR)
(74) Mandataire: Lavialle, Bruno François Stéphane

(56) Documents cités:
- EP-A2- 2 130 740
- DE-A1-102014 210 140
- FR-A1- 2 404 197
- FR-A1- 2 706 658
- JP-A- H03 180 999

## Description

La présente invention concerne un dispositif pour différencier des poids lourds, et plus particulièrement pour différencier un poids lourd de transport de marchandise d'un autocar. L'invention concerne également un dispositif de verbalisation comprenant un tel dispositif de différenciation et un procédé mis en œuvre par un tel dispositif de différenciation.

DE 10 2014 210140 A1 divulgue un dispositif pour différencier, parmi des véhicules passant devant le dispositif, un wagon de transport de marchandises ouvert d'un wagon de marchandise fermé ou d'un wagon de marchandise comprenant des supports verticaux, le dispositif étant agencé pour être disposé au bord d'une voie ferrée.

### ARRIERE PLAN DE L'INVENTION

Dans le but d'améliorer la sécurité routière, différents systèmes de radar automatique ont été installés au bord des routes pour mesurer la vitesse des véhicules et photographier ceux dont la vitesse est supérieure à un seuil déterminé. Le seuil est sensiblement égal à une vitesse maximale à laquelle les véhicules sont autorisés à rouler.

La vitesse maximale autorisée dépend du type de route (autoroutes, routes à chaussées séparées, voies urbaines...) mais aussi du type du véhicule. Ainsi, en France la vitesse maximale autorisée sur autoroute est de 130km/h pour une voiture, 100km/h pour un autocar et 90km/h pour un poids lourd de transport de marchandises.

Il est donc souhaitable que les radars automatiques soient capables d'identifier le type de véhicules contrôlés pour pouvoir les photographier en fonction de leur vitesse maximale autorisée.

Certains radars automatiques intègrent une antenne de détection permettant d'estimer la longueur du véhicule contrôlé. Ce type de radar est ainsi capable de classer les véhicules selon deux catégories, à savoir les véhicules légers (VL) et les poids lourds (PL) dont le poids total autorisé en charge est respectivement inférieur et supérieur à 3,5 tonnes.

Toutefois, ce type de radar ne permet pas de différencier un autocar qui n'est autre qu'un poids lourd destiné au transport de personnes, d'un poids lourds destiné au transport de marchandise. Une vérification de la nature du poids lourd photographié est donc nécessaire, ce qui peut s'avérer particulièrement fastidieux lorsque celle-ci est réalisée par un opérateur.

Un autre type de radar automatique intègre un télémètre agencé au niveau des roues pour établir une signature de la partie inférieure des véhicules contrôlés. Alors que la signature d'une voiture ou d'un autocar est sensiblement continue, celle d'un poids lourd de transports de marchandises est au contraire très bruitée par l'absence de carénage notamment au niveau de sa remorque.

Ce type de radar permet donc de différencier un autocar d'un poids lourd de transport de marchandises, à condition toutefois que ledit poids lourd ne soit pas carrossé en partie inférieure, et qu'aucun véhicule ne s'interpose entre le véhicule contrôlé et le radar.

### OBJET DE L'INVENTION

L'invention a donc pour objet de proposer un moyen pour différencier un autocar d'un poids lourd de transport de marchandises de manière simple et fiable, et qui obvie au moins en partie aux problèmes précités.

### RESUME DE L'INVENTION

A cet effet, l'invention propose un dispositif pour différencier, parmi des véhicules en mouvement, un poids lourd de transport de marchandises d'un autocar comportant sur toute sa longueur des surfaces vitrées bordées par une traverse supérieure et une traverse inférieure. Le dispositif comprend :
- un empilement vertical d'émetteurs de faisceaux incidents vers au moins une moitié supérieure d'un flanc d'au moins une partie des véhicules,
- un empilement vertical de récepteurs pour détecter les faisceaux renvoyés par le flanc desdits véhicules,
- un moyen de calcul du temps écoulé entre chaque émission d'un faisceau et la détection du faisceau renvoyé correspondant afin d'établir une image de chaque flanc des véhicules, et
- un moyen de traitement de l'image pour y détecter une absence ou une présence de traverse supérieure.

La détection d'une traverse supérieure trahit la présence de surfaces vitrées sur le flanc du véhicule en mouvement. Un tel dispositif permet ainsi de distinguer un poids lourd dont la remorque est dépourvue de vitrage, d'un autocar dont les surfaces vitrées sont prépondérantes sur une moitié supérieure. Un tel dispositif peut notamment être utilisé pour effectuer des statistiques sur le type des véhicules empruntant une portion de route.

Selon un mode de réalisation préféré de l'invention, les faisceaux incidents sont émis en infrarouge proche. De cette manière, le dispositif est opérationnel de jour comme de nuit et cela sans occasionner de gêne pour les conducteurs des véhicules puisque les faisceaux infrarouges ne sont pas visibles par l'homme.

De manière particulière, les faisceaux incidents sont émis par des émetteurs lasers tels que des diodes lasers.

Avantageusement, les faisceaux incidents sont émis par des leds. Les leds sont effectivement des sources de faisceaux infrarouges moins coûteuses que les émetteurs lasers.

De manière particulière, le dispositif comprend au moins un détecteur de présence ou de mouvement repérant, parmi les véhicules s'apprêtant à passer devant le dispositif, la présence d'un autocar ou d'un poids lourd de transport de marchandises.

Ainsi, lorsqu'aucun autocar ni poids lourd de transport de marchandises n'est détecté à proximité du dispositif pendant un laps de temps défini, il est possible de désactiver l'émission des faisceaux incidents et/ou la réception des faisceaux renvoyés, et à l'inverse de les activer lorsque qu'un autocar ou un poids lourd de transport de marchandises s'apprête à passer devant le dispositif. Un tel mode de fonctionnement permet de limiter la consommation en énergie du dispositif et d'en prolonger la durée de vie. Il permet également de limiter la quantité d'images à traiter et donc d'en accélérer le traitement.

Dans le cas où le dispositif est relié à un appareil de prise de vue, le capteur de présence ou de mouvement peut aussi permettre d'éviter un sur-déclenchement dudit appareil, notamment lorsque le véhicule contrôlé est en approche.

Selon un mode de réalisation particulier de l'invention, le détecteur a un champ de détection angulaire sensiblement horizontal s'étendant à sensiblement 2,5 mètres de hauteur par rapport à la route.

De la sorte, seuls les véhicules en mouvement dont la hauteur est supérieure à 2,5 mètre sont repérés par le détecteur, soit l'ensemble des autocars et des poids lourd de transport de marchandises. Il est ainsi possible de ne pas tenir compte des voitures passant à proximité du dispositif pour activer/désactiver l'émission des faisceaux incidents et/ou la réception des faisceaux renvoyés, ou pour commander tout autre appareil relié audit dispositif.

L'invention concerne également un dispositif de verbalisation comprenant au moins un tel dispositif de différenciation et un appareil de mesure capable de mesurer la vitesse d'un véhicule passant devant le dispositif de différenciation.

Selon un mode de réalisation préféré de l'invention, le dispositif de verbalisation comprend un appareil de prise de vue permettant de photographier le véhicule passant devant le dispositif de verbalisation pour y lire une plaque d'immatriculation du véhicule.

Un tel dispositif de verbalisation est ainsi capable de photographier un poids lourd de transport de marchandises à une vitesse différente d'un autocar.

L'invention concerne aussi un procédé pour différencier, parmi des véhicules en mouvement, un poids lourd de transport de marchandises d'un autocar comportant sur toute sa longueur des surfaces vitrées bordées par une traverse supérieure et une traverse inférieure. Le procédé comprend les étapes suivantes :
- émettre le long d'une ligne verticale des faisceaux incidents vers au moins une moitié supérieure d'un flanc d'au moins une partie des véhicules,
- capter le long d'une ligne verticale les faisceaux renvoyés par le flanc desdits véhicules,
- déterminer le temps écoulé entre chaque émission d'un faisceau et la détection du faisceau renvoyé correspondant afin d'établir une image de chaque flanc des véhicules,
- détecter sur l'image une absence ou une présence de traverse supérieure.

D'autres caractéristiques et avantages de l'invention ressortiront à la lecture de la description qui suit d'un mode de réalisation particulier, non limitatif de l'invention.

### BREVE DESCRIPTION DES FIGURES

Il sera fait référence aux figures annexées, parmi lesquelles :
- la figure 1 représente un dispositif de différenciation selon un mode de réalisation particulier de l'invention ;
- la figure 2 représente une première image d'un autocar passant à une première vitesse devant le dispositif illustré à la figure 1 ;
- la figure 3 représente une deuxième image, de définition moindre, d'un autocar passant à une deuxième vitesse devant le dispositif illustré à la figure 1 ;
- la figure 4 représente une image d'un poids lourd de transport de marchandise passant devant le dispositif illustré à la figure 1.

### DESCRIPTION DETAILLEE DE L'INVENTION

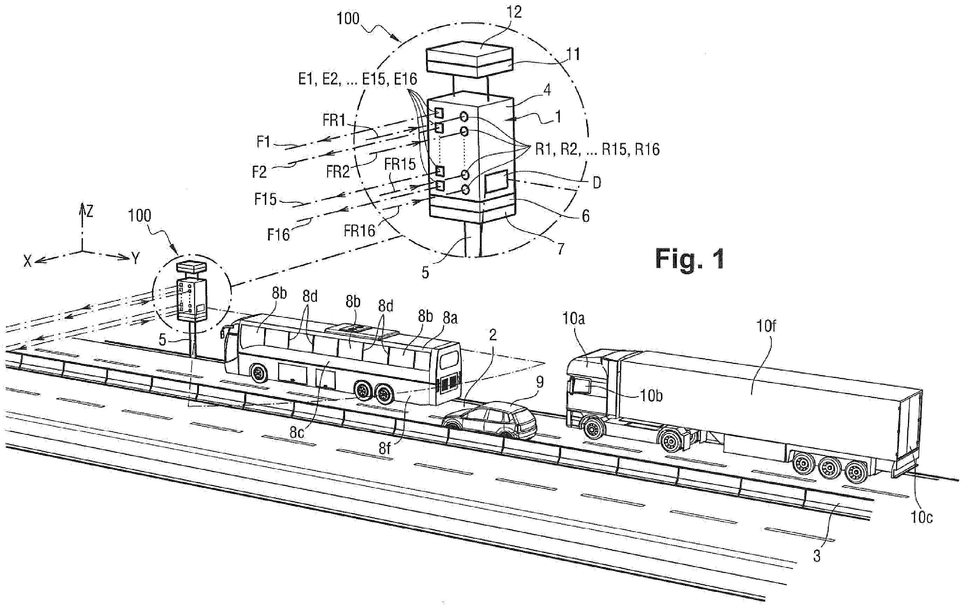

En référence à la figure 1, un dispositif 1 de différenciation, selon un mode de réalisation particulier de l'invention, est installé sur un bord d'une route 2 s'étendant horizontalement selon un axe Y. La route 2 est rectiligne et comprend quatre voies séparées deux à deux par un terre-plein central 3.

Le dispositif 1 comporte un boitier 4 monté à l'extrémité supérieure d'un poteau 5 s'étendant verticalement selon un axe Z. Le boitier 4 comprend un empilement vertical de seize émetteurs Ei (E1, E2, ..., E16) de faisceaux incidents Fi (F1, F2, ..., F16) infrarouges. Pour des raisons de lisibilité, seuls les deux premiers émetteurs E1, E2 et les deux derniers émetteurs E15, E16 ont été représentés avec les faisceaux incidents F1, F2, F15, F16 correspondants. Les faisceaux incidents Fi infrarouges sont ici émis par des diodes électroluminescentes (ou leds) mais peuvent aussi être émis par des émetteurs lasers ou toute source d'impulsions lumineuses infrarouges.

Les faisceaux incidents Fi sont équitablement répartis entre le faisceau F1 et le faisceau F16 qui sont respectivement à sensiblement deux et quatre mètres de hauteur par rapport la route 2. Les émetteurs Ei sont orientés de façon à ce que les faisceaux incidents Fi suivent une trajectoire selon un axe X perpendiculaire à l'axe Y de la route 2 en formant une barrière immatérielle verticale 5 s'étendant en travers de la route de manière que le flanc de chaque véhicule franchissant cette barrière soit balayé par les faisceaux incident Fi sur toute la longueur du véhicule et sur une hauteur du véhicule s'étendant entre deux mètres et quatre mètres. En cas d'absence d'obstacle devant le dispositif 1, les faisceaux incidents Fi traversent l'ensemble des quatre voies de la route 2, le terre-plein central 3 ayant une hauteur bien inférieure à deux mètres.

Le boitier 4 comprend également un empilement vertical de seize récepteurs Ri (R1, R2, ... R16) de faisceaux renvoyés FRi (FR1, FR2, ..., FR16). Les récepteurs Ri sont un à un juxtaposés aux émetteurs Ei correspondants. Pour les mêmes raisons que précédemment, seuls les deux premiers récepteurs R1, R2 et les deux derniers récepteurs R15, R16 ont été représentés avec les faisceaux renvoyés FR1, FR2, FR15, FR16 correspondants.

Le dispositif 1 comporte également un moyen de calcul 6 des temps de vol de chaque faisceau émanant des émetteurs Ei, c'est-à-dire des temps écoulés entre chaque émission des faisceaux incidents Fi et la détection des faisceaux renvoyés FRi correspondants. Le moyen de calcul 6 est ici agencé à l'intérieur du boitier 4 et permet de détecter la présence d'un obstacle devant au moins un des émetteurs Ei et d'établir une image I dudit obstacle au fur et à mesure qu'il passe devant le dispositif 1. Un moyen de traitement 7 relié au moyen de calcul 6 permet d'analyser la composition de l'image I. Le moyen de calcul 6 et le moyen de traitement 7 sont ici des programmes informatiques exécutés par une unité informatique qui est logée dans le boîtier 4 et qui comprend : une mémoire dans laquelle sont stockées les programmes, les données de paramétrage des programmes, et les données acquises ; un processeur exécutant les programmes et commandant le fonctionnement du dispositif ; des moyens de raccordement à un réseau permettant à l'unité informatique de transmettre à un serveur central distant les images et les données mesurées correspondant aux infractions détectées.

Sur la figure 1, un autocar 8 dont la hauteur est sensiblement inférieure à quatre mètres circule d'un côté du terre-plein central 5 et s'apprête à passer devant le dispositif 1. L'autocar 8 comporte de chaque côté des surfaces vitrées 8b s'étendant sur une moitié supérieure des flancs 8f de l'autocar. Les surfaces vitrées 8b sont bordées par une traverse supérieure 8a et une traverse inférieure 8c, et sont séparées par des montants verticaux 8d.

Circulent également sur cette route une voiture 9 dont la hauteur est strictement inférieure à deux mètres et un poids lourd 10 de transport de marchandises dont la hauteur est sensiblement inférieure à quatre mètres. Le poids lourd 10 comporte un camion tracteur 10a auquel est attelée une remorque 10c entièrement tôlée. La voiture 9 et le poids lourd 10 s'apprêtent, tout comme l'autocar 8, à passer devant le dispositif 1.

Lorsqu'à un instant t, une portion de l'autocar 8 se trouve devant le dispositif 1, chaque faisceau incident Fi atteignant la traverse supérieure 8a, la traverse inférieure 8c ou les montants 8d est réfléchi et est renvoyé vers le récepteur Ri correspondant. A l'inverse, une majeure partie de chaque faisceau incident Fi rencontrant une surface vitrée 8b traverse celle-ci. L'autre partie est réfléchie et présente une intensité bien inférieure à celle des faisceaux incidents traversant la surface vitrée 8b. Les récepteurs Ri correspondants détectent donc la partie des faisceaux incidents qui est réfléchie mais utilise un seuil prédéterminé pour l'ignorer.

La distance séparant chaque émetteur Ei et récepteur Ri de l'autocar 8 étant sensiblement identique, les faisceaux incidents Fi qui sont renvoyés par le flanc 8f de l'autocar 8 ont donc un temps de vol sensiblement identique.

En déterminant à l'instant t l'ensemble des faisceaux incidents Fi qui ont un temps de vol sensiblement identique, le moyen de calcul 6 établit une suite de points alignés verticalement schématisant une portion du flanc 8f de l'autocar 8 se trouvant à l'instant t devant le dispositif 1.

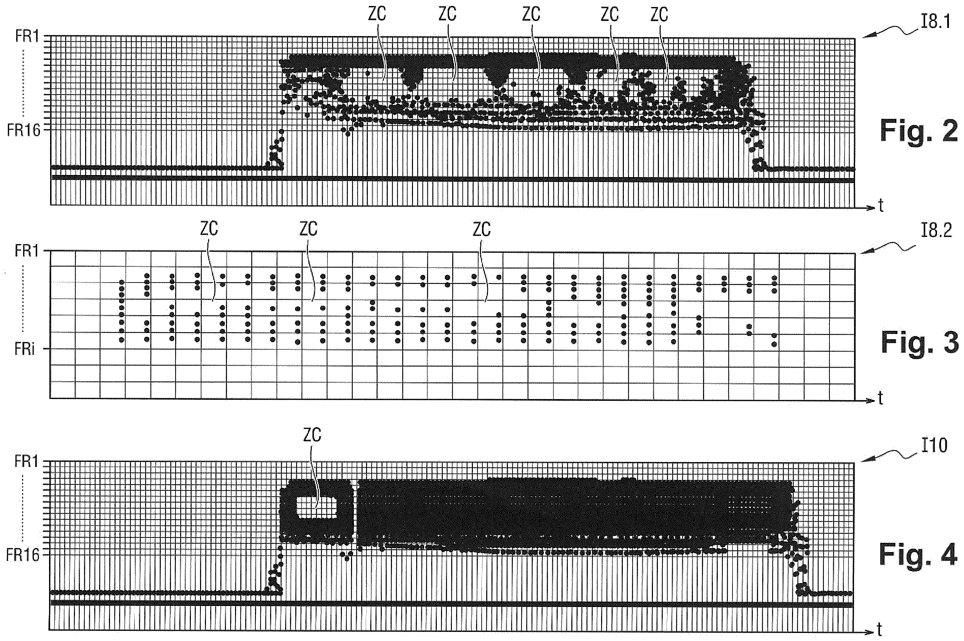

Ainsi, au fur et à mesure que l'autocar 8 passe à une vitesse V1 devant le dispositif 1, le moyen de calcul 6 établit, comme illustré à la figure 2, une image I8.1 de la moitié supérieur du flanc 8f de l'autocar 8.

L'image I8.1 comporte des zones de creux ZC correspondant aux surfaces vitrées 8b de l'autocar 8, et des zones pleines correspondant aux parties non vitrées, autrement dit à la traverse supérieure 8a, à la traverse inférieure 8c et aux montants 8d.

Le moyen de traitement 7 détecte sans difficulté sur l'image I8.1 la présence d'au moins une ligne de points au-dessus des zones de creux, ce qui trahit la présence de la traverse supérieure 8a de l'autocar 8.

A l'inverse, lorsque le poids lourd 10 passe devant le dispositif 1, les faisceaux incidents Fi se réfléchissent en majeure partie sur la tôle formant le flanc 10f du poids lourd 10. Comme précédemment, et au fur et à mesure que le poids lourd 10 passe devant le dispositif 1, le moyen de calcul 6 établit une image I10 d'une moitié supérieur du flanc 10f du poids lourd 10 (figure 4).

L'image I10 comporte, contrairement à l'image 18.1, une unique zone de creux ZC correspondant à une surface vitrée 10b du camion tracteur 10a, suivie d'une zone pleine ZP correspondant à une moitié supérieure de la remorque 10c tôlée. L'absence de zones de creux sur la majeure partie de l'image I10 trahit l'absence de surfaces vitrées. Il n'est donc pas possible de détecter dans cette image une traverse supérieure.

La détection de la présence ou de l'absence d'une traverse supérieure sur les images I8.1 et I10 permet donc de différencier l'autocar 8 du poids lourd 10 sans avoir recours à des moyens de calcul et de traitement d'image important.

On notera que les images I8.1 et I10 permettent d'évaluer la hauteur de l'autocar 8 et du poids lourd 10.

On notera également que le calcul du temps de vol des faisceaux émanant des émetteurs Ei permet non seulement de déterminer une position du flanc du véhicule balayé mais également de déterminer facilement dans quelle voie circule le véhicule.

On notera aussi qu'il est possible d'utiliser un nombre différent d'émetteurs/récepteurs. La figure 3 représente de manière similaire à la figure 2 une image I8.2 du flanc 8f d'un autocar 8 qui passe devant le dispositif 1 à une vitesse V2 supérieure à la vitesse V1. Ainsi, la définition horizontale de l'image I8.2 est supérieure à celle de l'image I8.1. La définition verticale de l'image I8.2 est ici inférieure à celle de l'image I8.1 car un nombre plus faible d'émetteurs et de récepteurs est utilisé. Ceci n'empêche cependant pas d'observer la présence de zones de creux ZC. Le moyen de traitement 7 a, comme précédemment, aucun mal à détecter la présence d'au moins une ligne de points au-dessus des zones de creux ZC, et donc la présence de la traverse supérieure 8a de l'autocar 8.

Le nombre d'émetteurs et de récepteurs est toutefois au minimum égal à deux. Un premier émetteur est alors agencé de façon à émettre au moins un faisceau incident atteignant la traverse supérieure 8a de l'autocar 8, alors qu'un un deuxième émetteur est agencé de façon à émettre au moins un faisceau rencontrant les surfaces vitrées 8b de l'autocar 8.

Selon une caractéristique avantageuse de l'invention, le dispositif 1 comprend un détecteur D de présence agencé sur une face latérale du boitier 4 pour détecter les véhicules hauts s'apprêtant à passer devant le dispositif 1. Le détecteur D est agencé à sensiblement 2,5 mètres de hauteur par rapport à la route 2 et a un champ de détection angulaire sensiblement horizontal couvrant les voies surveillées de la route 2.

Ainsi, lorsqu'aucun autocar ni poids lourd de transport de marchandises n'est détecté par le détecteur D pendant un laps de temps défini, l'émission des faisceaux incidents Fi et/ou la réception des faisceaux renvoyés FRi peuvent par exemple être désactivées. A l'inverse, si un autocar ou un poids lourd de transport de marchandises est détecté par le détecteur D, l'émission des faisceaux incidents Fi et la réception des faisceaux renvoyés FRi peuvent être activées avant que l'autocar ou le poids lourd de transport de marchandises ne passe devant le dispositif 1.

Le détecteur D permet ainsi de limiter la consommation en énergie du dispositif 1 et d'en prolonger la durée de vie. En outre, il limite la quantité d'images à traiter, ce qui permet d'en accélérer le traitement.

Dans le cas où le dispositif est relié à un appareil de prise de vue, le capteur de présence ou de mouvement peut aussi permettre d'éviter un sur-déclenchement dudit appareil, notamment lorsque le véhicule contrôlé est en approche.

Selon une autre caractéristique avantageuse de l'invention, le dispositif 1 de différenciation est intégré à un dispositif 100 de verbalisation qui comprend un appareil de mesure 11 capable de mesurer la vitesse d'un véhicule passant devant le dispositif et un appareil de prises de vue 12 capable de photographier ledit véhicule de manière à pouvoir l'identifier par sa plaque d'immatriculation.

Le dispositif 100 de verbalisation peut, grâce au dispositif 1, différencier l'autocar 8 du poids lourd 10 et donc les photographier en fonction d'un premier et d'un deuxième seuils de vitesse. Lorsqu'aucun autocar ni poids lourd n'est détecté par le détecteur D du dispositif 1 et que l'appareil de mesure 11 mesure la vitesse d'un véhicule, le dispositif 100 peut en déduire que ledit véhicule est une voiture et peut alors la photographier en fonction d'un troisième seuil de vitesse.

On notera que les images I8.1, I8.2, I10 combinées aux vitesses mesurées par l'appareil de mesure 11 permettent d'évaluer simplement la longueur de l'autocar 8 et du poids lourd 10.

Bien entendu, l'invention n'est pas limitée aux modes de réalisation décrits mais englobe toute variante entrant dans le champ de l'invention telle que définie par les revendications.

Bien que les émetteurs Ei et les récepteurs Ri soient ici empilés de façon à couvrir qu'une moitié supérieure des flancs de l'autocar 8 et du poids lourd 10, les faisceaux incidents Fi pourraient aussi être émis sur toute la hauteur de l'autocar 8 ou du poids lourd 10.

Le dispositif 1 selon l'invention peut être adapté à une utilisation le long de tout type de route et par exemple une route à deux, quatre, six ou huit voies séparées par un terre-plein central, un muret, une glissière de sécurité ou une simple signalisation au sol.

Le dispositif 1 selon l'invention peut comporter un deuxième détecteur de présence de façon à pouvoir détecter les véhicules hauts circulant de l'autre côté du terre-plein central 3 par rapport aux véhicules 8, 9, 10 et s'apprêtant à passer devant le dispositif 1. De la sorte, la détection d'un véhicule haut en approche du dispositif 1 est possible dans les deux sens de circulation, notamment pour activer et désactiver l'émission des faisceaux incidents.

## Revendications

1. Dispositif (1) pour différencier, parmi des véhicules (8, 9, 10) passant devant le dispositif (1), un poids lourd de transport de marchandises (10) d'un autocar (8) comportant sur au moins une majeure partie de sa longueur des surfaces vitrées (8b) bordées par une traverse supérieure (8a) et une traverse inférieure (8c), le dispositif étant agencé pour être disposé au bord d'une route (2) et comprenant :
- un empilement vertical d'émetteurs (Ei) de faisceaux incidents (Fi) vers au moins une moitié supérieure d'un flanc (8f, 10f) d'au moins une partie des véhicules,
- un empilement vertical de récepteurs (Ri) pour détecter les faisceaux renvoyés (FRi) par le flanc desdits véhicules,
- un moyen de calcul (6) du temps écoulé entre chaque émission d'un faisceau et la détection du faisceau renvoyé correspondant afin d'établir une image (I8.1, I8.2, I10) de chaque flanc des véhicules, et
- un moyen de traitement de l'image (7) pour y détecter une absence ou une présence de traverse supérieure (8a).

2. Dispositif selon la revendication 1, dans lequel les faisceaux incidents (Fi) sont émis en infrarouge proche.

3. Dispositif selon la revendication 2, dans lequel les faisceaux incidents sont émis par des émetteurs lasers tels que des diodes lasers.

4. Dispositif selon la revendication 2, dans lequel les faisceaux incidents sont émis par des leds.

5. Dispositif selon l'une quelconque des revendications précédentes, comprenant au moins un détecteur (D) de présence ou de mouvement repérant, parmi les véhicules s'apprêtant à passer devant le dispositif, la présence d'un autocar (8) ou d'un poids lourd de transport de marchandises (10).

6. Dispositif selon la revendication 5, dans lequel le détecteur (D) a un champ de détection angulaire sensiblement horizontal s'étendant sensiblement 2,5 mètres de hauteur par rapport à la route.

7. Dispositif de verbalisation (100) comprenant au moins un dispositif (1) de différenciation selon l'une quelconque des revendications précédentes et un appareil de mesure (11) capable de mesurer la vitesse d'un véhicule passant devant le dispositif de différenciation.

8. Dispositif de verbalisation (100) selon la revendication 7, comprenant un appareil de prise de vue (12) du véhicule passant devant le dispositif de verbalisation pour y lire une plaque d'immatriculation du véhicule.

9. Procédé pour différencier, parmi des véhicules en mouvement, un poids lourd de transport de marchandises (10) d'un autocar (8) comportant sur toute sa longueur des surfaces vitrées (8b) bordées par une traverse supérieure (8a) et une traverse inférieure (8c), le procédé comprenant les étapes suivantes :
- émettre le long d'une ligne verticale des faisceaux incidents (Fi) vers au moins une moitié supérieure d'un flanc (8f, 10f) d'au moins une partie des véhicules,
- capter le long d'une ligne verticale les faisceaux renvoyés (FRi) par le flanc desdits véhicules,
- déterminer le temps écoulé entre chaque émission d'un faisceau et la détection du faisceau renvoyé correspondant afin d'établir une image (I8.1, I8.2, I10) de chaque flanc des véhicules,
- détecter sur l'image une absence ou une présence de traverse supérieure (8a).

## Patentansprüche

1. Vorrichtung (1) zum Unterscheiden, unter an der Vorrichtung (1) vorbeifahrenden Fahrzeugen (8, 9, 10), eines Lastwagens (10) zum Warentransport von einem Bus (8), der zumindest über einen Großteil seiner Länge verglaste Flächen (8b) hat, die von einem oberen Querträger (8a) und einem unteren Querträger (8c) begrenzt sind, wobei die Vorrichtung so ausgebildet ist, dass sie am Rand einer Straße (2) aufgestellt wird, und umfasst:
- einen vertikalen Stapel von Sendern (Ei) von einfallenden Strahlenbündeln (Fi) in Richtung mindestens einer oberen Hälfte einer Flanke (8f, 10f) mindestens eines Teils der Fahrzeuge,
- einen vertikalen Stapel von Empfängern (Ri) zum Detektieren der von der Flanke der genannten Fahrzeuge reflektierten Strahlenbündel (FRi),
- Berechnungsmittel (6) zum Berechnen der Zeit, die zwischen jedem Senden eines Strahlenbündels und der Detektion des entsprechenden reflektierten Strahlenbündels vergeht, um ein Bild (I8.1, I8.2, I10) jeder Flanke der Fahrzeuge zu erzeugen, und
- Verarbeitungsmittel zur Verarbeitung des Bildes (7), um darin ein Nichtvorhandensein oder ein Vorhandensein des oberen Querträgers (8a) zu detektieren.

2. Vorrichtung nach Anspruch 1, bei der die einfallenden Strahlenbündel (Fi) im Nahinfrarotbereich emittiert werden.

3. Vorrichtung nach Anspruch 2, bei der die einfallenden Strahlenbündel durch Lasersender wie z. B Laserdioden emittiert werden.

4. Vorrichtung nach Anspruch 2, bei der die einfallenden Strahlenbündel durch LEDs emittiert werden.

5. Vorrichtung nach einem der vorhergehenden Ansprüche, umfassend mindestens einen Detektor (D) zum Erfassen eines Vorhandenseins oder einer Bewegung, der unter den Fahrzeugen, die im Begriff sind, vor der Vorrichtung vorbeizufahren, das Vorhandensein eines Busses (8) oder eines Lastwagens (10) zum Warentransport identifiziert.

6. Vorrichtung nach Anspruch 5, bei der der Detektor (D) ein im Wesentlichen horizontales Winkeldetektionsfeld hat, das sich in einer Höhe von im Wesentlichen 2,5 Metern in Bezug auf die Straße erstreckt.

7. Protokollierungsvorrichtung (100), die mindestens eine Unterscheidungsvorrichtung (1) nach einem der vorhergehenden Ansprüche und ein Messgerät (11) umfasst, das imstande ist, die Geschwindigkeit eines vor der Unterscheidungsvorrichtung vorbeifahrenden Fahrzeugs zu messen.

8. Protokolliervorrichtung (100) nach Anspruch 7, umfassend eine Bildaufnahmevorrichtung (12) zur Aufnahme eines Bildes des Fahrzeugs, das vor der Protokollierungsvorrichtung vorbeifährt, um darauf ein Nummernschild des Fahrzeugs zu lesen.

9. Verfahren zum Unterscheiden unter sich bewegenden Fahrzeugen eines Lastwagens (10) zum Warentransport von einem Bus (8), der über seine gesamte Länge verglaste Flächen (8b) umfasst, die von einem oberen Querträger (8a) und einem unteren Querträger (8c) begrenzt sind, wobei das Verfahren die folgenden Schritte umfasst:
- Emittieren von einfallenden Strahlenbündeln (Fi) entlang einer vertikalen Linie in Richtung mindestens einer oberen Hälfte einer Flanke (8f, 10f) mindestens eines Teils der Fahrzeuge,
- Erfassen der von der Flanke der genannten Fahrzeuge reflektieren Strahlenbündel (FRi) entlang einer vertikalen Linie,
- Bestimmen der Zeit, die zwischen jedem Senden eines Strahlenbündels und der Detektion des entsprechenden reflektierten Strahlenbündels vergeht, um ein Bild (I8.1, I8.2, I10) jeder Flanke der Fahrzeuge zu erzeugen,
- Detektieren eines Nichtvorhandenseins oder eines Vorhandenseins des oberen Querträgers (8a) auf dem Bild.

## Claims

1. A distinguishing device (1) for distinguishing, between vehicles (8, 9, 10) passing in front of the device (1), a heavy goods vehicle (HGV) (10) from a coach (8) including over at least a major portion of its length windows (8b) between a top side member (8a) and a bottom side member (8c), the device being arranged to be placed at the side of a road (2) and comprising:
- a vertical stack of emitters (Ei) of incident beams (Fi) towards at least top halves of flanks (8f, 10f) of at least some of the vehicles;
- a vertical stack of receivers (Ri) for detecting the beams (FRi) that are reflected by the flanks of said vehicles;
- calculation means (6) for calculating the time that elapses between each emission of a beam and the detection of the corresponding reflected beam in order to establish an image (18.1, 18.2, 110) of each vehicle flank; and
- image processor means (7) for detecting therein the absence or the presence of a top side member (8a).

2. A device according to claim 1, wherein the incident beams (Fi) are emitted in the near infrared.

3. A device according to claim 2, wherein the incident beams are emitted by laser emitters such as laser diodes.

4. A device according to claim 2, wherein the incident beams are emitted by LEDs.

5. A device according to any preceding claim, including at least one presence or movement detector (D) for identifying the presence of a coach (8) or of an HGV (10) among the vehicles about to pass in front of the device.

6. A device according to claim 5, wherein the detector (D) has a substantially horizontal angular detection field extending at a height of substantially 2.5 meters above the road.

7. A ticketing device (100) including at least one distinguishing device (1) according to any preceding claim together with measurement apparatus (11) capable of measuring the speed of a vehicle passing in front of the distinguishing device.

8. A ticketing device (100) according to claim 7, including a camera (12) for taking a picture of the vehicle passing in front of the ticketing device in order to read a number plate of the vehicle in the photograph.

9. A method of distinguishing among moving vehicles between a heavy goods vehicle (10) and a coach (8) that includes along its entire length windows (8b) between a top side member (8a) and a bottom side member (8c), the method comprising the following steps:
- emitting incident beams (Fi) along a vertical line towards at least top halves of flanks (8f, 10f) of at least some of the vehicles;
- picking up along a vertical line the beams (FRi) that are reflected by the flank of a said vehicle;
- determining the time that elapses between each emission of a beam and detecting the corresponding reflected beam in order to establish an image (18.1, 18.2, 110) of each vehicle flank; and
- in the image, detecting the absence or presence of a top side member (8a).
